# EUROPEAN PATENT SPECIFICATION

(11) **EP 3 539 099 B1**
(45) Date of publication and mention of the grant of the patent: **23.10.2024**
(21) Application number: 17861173.7
(22) Date of filing: 09.11.2017
(51) Int. Cl.: G08B 17/00, G08B 25/10, G08B 25/14

(54) **SAFETY DETECTOR AND SYSTEM FOR MULTI DWELLING UNITS AND THE LIKE**
SICHERHEITSDETEKTOR UND SYSTEM FÜR MULTIWOHNEINHEITEN UND DERGLEICHEN
DÉTECTEUR DE SÉCURITÉ ET SYSTÈME POUR UNITÉS D'HABITATION MULTIPLES ET ANALOGUES

(30) Priority: 10.11.2016 NO 20161779
(43) Date of publication of application: 18.09.2019
(73) Proprietor: SFTY AS, 1366 Lysaker (NO)
(72) Inventor: STENERUD, Jon Øivind, 0871 Oslo (NO); BAKKER, Stein, 1367 Snarøya (NO)
(74) Representative: Zacco Norway AS
(86) International application number: PCT/NO2017/050290
(87) International publication number: WO 2018/088912

(56) References cited:
- WO-A1-2012/025517
- WO-A1-2016/092870
- US-A- 5 587 705
- US-A1- 2001 024 163
- US-A1- 2013 024 800
- US-A1- 2014 266 669

## Description

### TECHNICAL FIELD

The present invention relates to a system and method for detecting alarm conditions in a security group with a plurality of security zones, typically typically for multi dwelling units and the like. In particular, the invention relates to a system and method comprising sensor units configured to detect alarm conditions and communicate alarm signals to similar detectors as well as to back-end systems monitoring the sensor units. The system an method of detector units may communicate over a plurality of networks and across security zones like dwelling units, apartments etc. Such a system is known, for example, from WO2012/025517.

### BACKGROUND

Smoke detectors have become common over the last few decades and are now installed in a majority of homes. Most smoke detectors, when detecting a condition that may be indicative of a fire, sound an audible alarm. Some detectors are connected such that several detectors in a residential unit are able to trigger each other, and some are even connected to remote systems and capable of alerting the home owner or fire department. Some are even integrated with other security systems, particularly burglar alarms.

Lately, such security systems have developed towards becoming part of complete smart home solutions. However, most products and smart home systems are developed for single dwelling units. Systems for apartments and other multi dwelling units such as compact Campus dwelling, or similar, still have to rely on individual systems for each dwelling unit or traditional wired systems. Consequently, many apartments have an outdated smoke detector in the ceiling, many are out of batteries, and even residents who maintain an updated fire alert system with fresh batteries obtain no added security from the systems installed in their neighbors' apartments if the neighbors are not equally diligent. Furthermore, only 1-3% of apartments have a burglar alarm system, worldwide. It is therefore a need for devices and systems that are specifically designed for multi dwelling units in order to improve security and safety for the many families that live in them.

### SUMMARY OF THE DISCLOSURE

In order to mitigate some of the shortcomings of current alarm systems when they are installed in security groups such as multi dwelling units, apartment buildings, hospitals, schools, etc., an alarm system and method including sensor units and a back-end server with extended communication capabilities has been developed.

According to a first aspect, a sensor unit for use in a security group with a plurality of security zones has been developed. A sensor unit comprise at least one sensor, a controller unit configured to receive sensor data from the at least one sensor and determine whether the received sensor data is indicative of an alarm condition, a first radio communication interface for transmitting and receiving broadcast messages, a second radio communication interface for transmitting and receiving addressed data packets, and a memory storing data uniquely identifying the sensor unit, and data uniquely identifying the security unit zone to which it has been assigned.

The controller unit is also configured to, upon determination of the presence of an alarm condition, create an alarm message including a description of the alarm condition, a unique identification of the message, the data uniquely identifying the security unit zone to which the sensor unit is assigned, and the data uniquely identifying the one or more buildings. This alarm message is then be broadcast over the first radio communication interface and transmitted in data packets addressed to a back-end server over the second radio communication interface. Upon receipt of an alarm message over one of the first and the second radio communication interfaces, the sensor unit activate at least one of an audible and a visual alarm, and retransmitting the received alarm message over at least one of the first and the second radio communication interface.

According to some embodiments the controller in a sensor unit is configured to retransmitted a received alarm message over the first radio communication interface and over the second radio communication interface if it was received over the first radio communication interface, and over the first radio communication interface if it was received over the second radio communication interface.

In some embodiments the controller is further configured to activate at least one of an audible and a visual alarm immediately after detection of an alarm condition based on the received sensor data or after receipt of an alarm message from a sensor unit which is associated with the same security zone, and after a predetermined time delay if an alarm message is received from a sensor unit which is associated with a different security zone.

In some embodiments, not part of present invention, one or more security zones may be defined as prioritized security zones, and alarm messages received from a sensor unit associated with a prioritized security zone is treated as if it is received from a sensor unit which is associated with the same security zone by all other sensor units. This may typically be the case for security zones that are common areas like stairwells and basements in an apartment building.

According to some embodiments a sensor unit include a controller unit which is further configured to include sensor data, received from the at least one sensor, in the alarm message.

According to an aspect of the invention, a back-end server for a security system is provided and configured to receive alarm messages from sensor units. A back-end server will typically include all the hardware components of an application server or a web server, but at the very least it should include at least one data processing unit, a computer network communication interface and memory. The memory (used herein to include any combination of working memory, persistent memory, hard drives, and databases) may hold information describing a representation of one or more security groups, a list of a plurality of security zones, a list of a plurality of sensor units, a registry of first associations associating each security zone with one security group, and a registry of associations associating each sensor unit with one security zone. It should be noted that in embodiments only handling one security group, the definition of the security group does not have to be explicit, and the association of security zones with the security group will be implicit in the existence of the representation of the security zone within the framework representing the security group.

The memory may further include instructions enabling the data processing unit to receive an alarm message from one of the listed sensor units over the computer network communication interface, extract information describing an alarm condition and information identifying the sensor unit which detected the alarm condition from the alarm message and storing the extracted information in the memory, and retransmit the received message to the sensor units listed in the list of a plurality of sensor units.

A back-end server may, in some embodiments, further comprise instructions in the memory enabling the data processing unit to perform the functions of a web server, including generating a view including a representation of security units zones in a security group, generating a view including a representation of received alarm conditions associated with one or more security zones, and generating a view including user input controls enabling receipt of user input that can be used to generate at least one of a representation of an additional security group, and an additional entry in the list of security units zones along with an association of the new entry with an existing representation of a security group.

The back-end server may also include instructions in memory enabling the processor to receive a plurality of alarm messages from one or more of the sensor units, and process sensor data extracted from the plurality of alarm messages to determine at least one of a development over time and a distribution in space of the detected alarm condition. The result of this processing may be presented in messages sent to cellphones (smartphones), for example as SMS, MMS or pushed to an app installed on the cellphones. It may also or alternatively be presented as a web page retrievable from the back-end server based on web server technology.

A furhter aspect of the invention is an alarm system for detecting alarm conditions in a security group with a plurality of security zones. Such a system may include a plurality of sensor units each with at least one sensor, a first communication interface for broadcasting messages to other sensor units and a second communication interface for transmitting data packets over a computer network. The system may also include a back-end server connected to a computer network and holding a representation of the plurality of sensor units, a plurality of security zones, one or more security groups, an association of each sensor unit with a security unit zone and an association of each security unit zone with a security group. Each sensor unit is configured to, upon detection of an alarm condition, generate an alarm message, broadcast the alarm message over the first communication interface and transmit the alarm message over the second communication interface addressed to the back-end server, each sensor unit is configured to, upon receipt of an alarm message, rebroadcast the received alarm message over the first communication interface and transmit the alarm message over the second communication interface addressed to the back-end server, and the back-end server is configured to, upon receipt of an alarm message, update a list of alarm messages and retransmit the received alarm message to the plurality of sensor units.

It should be noted that the term "each" when used in this specification and in the appended claims is only intended to cover the units that actually work in accordance with the invention. Connecting additional units without this functionality to the system would not bring the system as a whole outside the scope of the invention. As such, "each" of the sensor units may only be "some" of the units connected to the system. For example, if an outdoor temperature sensor is connected to the system and capable of measuring and reporting outdoor temperatures but unable to generate alarm messages, this unit should not be interpreted as one of the sensor units described in this specification.

In some embodiments the plurality of sensor units may further comprise at least one of an audible and a visual alarm unit and be configured to activate at least one of the audible and the visual alarm unit immediately upon detection of an alarm condition or after receipt of an alarm message from a sensor unit which is associated with the same security zone, and after a predetermined time delay if an alarm message is received from a sensor unit which is associated with a different security zone. This time delay may be user or operator configurable.

The back-end server may further be configured to process sensor data extracted from a plurality of received alarm messages to determine at least one of a development over time and a distribution in space of the detected alarm condition, and, based on the determination, generate a presentation of at least one of a present alarm situation, a recommended escape route, and a determined presence of persons in the security group in which the alarm messages originated. In some embodiments this generated presentation is distributed as at least one of a message sent to devices connected to a cellular network and as a view presented as a web page.

According to an even further aspect of the invention a method is provided comprising providing a plurality of sensor units in a plurality of locations each having a first and a second communication interface, associating each sensor unit with a security zone, providing a back-end server connected to a computer network, and using sensors in the sensor units to monitor at least one physical parameter which may indicate the existence of an alarm condition. Upon detection of a physical parameter indicative of the existence of an alarm condition, an alarm message may be generated including a description of the alarm condition (and potentially also sensor data), a unique identification of the message, the data uniquely identifying the security unit zone to which the sensor unit is assigned, and the data uniquely identifying the one or more buildings. The unique identification of the message may include a time stamp and an identification code uniquely identifying the sensor unit.

The created message may be broadcasted over the first radio communication interface and transmitted in data packets addressed to the back-end server over the second radio communication interface. Upon receipt of an alarm message over one of the first and the second radio communication interfaces, at least one of an audible and a visual alarm may be activated, and the received alarm message may be retransmitted over at least one of the first and the second radio communication interface.

In some embodiments the method also includes processing, in the back-end server, sensor data extracted from a plurality of received alarm messages to determine at least one of a development over time and a distribution in space of the detected alarm condition, and, based on the determination, generate a presentation of at least one of a present alarm situation, a recommended escape route, and a determined presence of persons in the security group in which the alarm messages originated. The generated presentation may be distributed as at least one of a message sent to devices connected to a cellular network and as a view presented as a web page.

The invention for detecting alarm conditions in a security group with a plurality of security zones is set out in the independent claims 1 and 5, and alternative embodiments are provided in claim 2-4 and 6-7 correspondingly.

### BRIEF DESCRIPTION OF THE DRAWINGS

A non-limiting detailed description of the invention will now be given in the form of examples and with reference to the attached drawings, where:
FIG. 1 is an overview of a system according to the invention;
FIG. 2 is a block diagram of a sensor unit;
FIG. 3 is a flow chart of a method that can be performed in a sensor unit when an included sensor indicates the presence of an alarm condition;
FIG. 4 is a flow chart of a method that can be performed in a sensor unit when an alarm message is received from another sensor unit in the same security zone;
FIG. 5 is a flow chart of a method that can be performed in a sensor unit when an alarm message is received from another sensor unit in a different security zone;
FIG. 6 is a diagram of a part of the signal flow between units in a system according to the invention;
FIG. 7A-D are views generated by a web server operating in accordance with the invention.

### DETAILED DESCRIPTION

In the following description of various embodiments, reference will be made to the drawings, in which like reference numerals denote the same or corresponding elements. The drawings are not necessarily to scale. Instead, certain features may be shown exaggerated in scale or in a somewhat simplified or schematic manner, wherein certain conventional elements may have been left out in the interest of exemplifying the principles of the invention rather than cluttering the drawings with details that do not contribute to the understanding of these principles.

It should be noted that, unless otherwise stated, different features or elements may be combined with each other whether or not they have been described or illustrated together as part of the same embodiment. The combinations of features or elements in the embodiments are presented in order to facilitate understanding of the invention rather than limit its scope to a limited set of embodiments. To the extent that alternative elements with substantially the same functionality are shown in respective embodiments, they are intended to be interchangeable, but for the sake of brevity, no attempt has been made to disclose a complete description of all possible permutations of features. A feature should not be interpreted as essential to an embodiment merely because it is included as part of the description or illustration of that embodiment.

Furthermore, those with skill in the art will understand that the invention may be practiced without many of the details included in this detailed description. Conversely, some well-known structures or functions may not be shown or described in detail, in order to avoid unnecessarily obscuring the relevant description of the various implementations. The terminology used in the description presented below is intended to be interpreted in its broadest reasonable manner, even though it is being used in conjunction with a detailed description of certain specific implementations of the invention.

The present invention will be described by way of examples related to detection of alarm conditions such as the presence of smoke in apartments that are part of apartment buildings and similar structures that include several residences. The apartment buildings will be referred to as multi dwelling units and residences such as apartments, and also common areas such as basements, stairwells etc., will be referred to as dwelling units. However, the invention is not limited to residential units, and may equally well be provided or used in office buildings, hospitals, hotels, construction plants, factories, offshore installations etc. The examples used to describe the principles of the invention are therefore not intended to be interpreted as limiting on the scope of the invention. In more general terminology, the invention is applicable to security groups consisting of multiple security zones or security units, which in the examples provided below could be substituted for multi dwelling units and dwelling units.

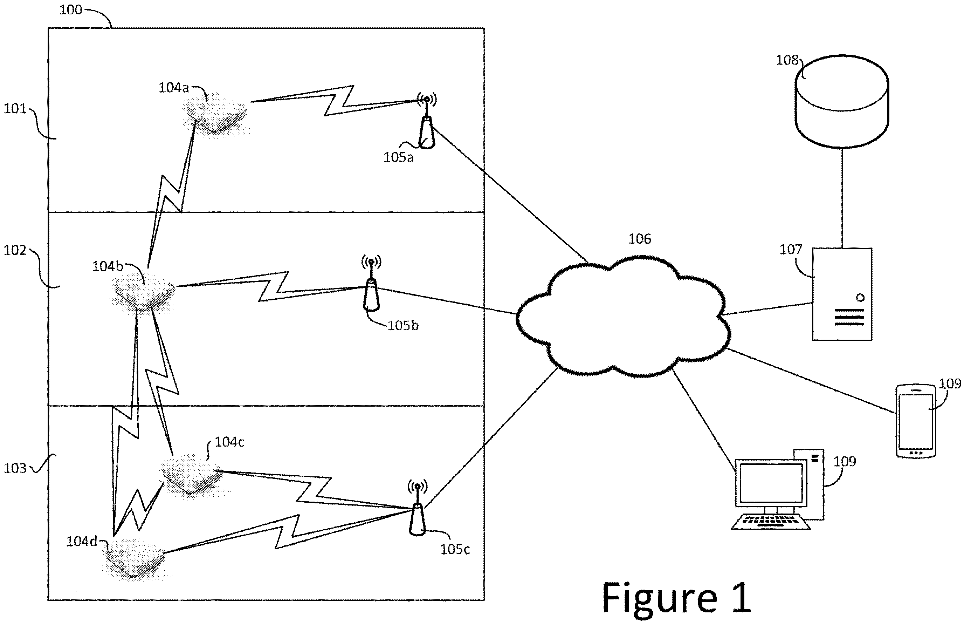

Reference is now made to FIG. 1, which illustrates a system configured to operate in accordance with the invention. Such a system includes a multi dwelling unit 100, which may be a house or an apartment building, with three dwelling units 101, 102, 103. The dwelling units 101, 102, 103, which may be apartments, each include one or more sensor units. In particular, the first dwelling unit 101 has one sensor unit 104a, the second dwelling unit has one sensor unit 104b and the third dwelling unit has two sensor units 104c, 104d. Similarly, each dwelling unit 101, 102, 103 has a wireless access point 105a, 105b, 105c. When it is not necessary to distinguish between sensor units and wireless access points, the reference number without the appended letter will be used.

The wireless access points are connected to a wide area network 106, which may be the Internet. As will be readily understood by those with skill in the art, this connection may involve additional units like routers, modems, firewalls and the like, but their illustration and description is unnecessary for the presentation of the invention and they have been left out for the sake of brevity and clarity.

A back-end server 107 may be located remotely. The back-end server 107 is connected to the network 106 and is capable of communication with the sensor units 104. The server may also be connected to, or include, a database 108.

FIG. 1 also shows a personal computer and a smartphone both given the same reference number 109 since there is no need to distinguish them from one another. These devices are intended to be representative of any device capable of connecting to the computer network 106, directly or indirectly, and interact with one or more of the other devices.

The sensor units include one or more sensors that are capable of detecting or measuring events or changes in the environment. In addition, each sensor unit includes a first radio communication interface which allows it to broadcast the existence of an alarm condition to other sensor units 104 that are within range and a second radio communication interface which allows it to communicate alarm conditions or other data over a wireless access point 105 and the network 106. A sensor unit will also include necessary electronic hardware, software and information storage capabilities to process sensor input and received communication signals, make decisions regarding alarm conditions, as well as communicate information over one or both of the radio communication interfaces. A sensor unit 104 may in addition have a wired communication interface.

The sensor units 104 may all have the same feature set, i.e. they may have identical functionality. However, it is consistent with the principles of the invention to have sensor units 104 that share a common subset of features, but which vary for example in which sensors are included. For example, all sensor units 104 in a system may include smoke detectors, while only some include additional sensors such as a burglar alarm (e.g. in the form of a motion detector), temperature sensor, humidity sensor, etc.

When an alarm condition is detected in one of the sensor units 104, the sensor unit 104 transmit a broadcast message announcing this condition. If sensor unit 104d detects an alarm condition it broadcasts an alarm message which may be received by the neighboring sensor units 104c, which is part of the same dwelling unit 103, and sensor unit 104b which is part of the neighboring dwelling unit 102. When the neighboring sensor units 104b, 104c receive the alarm message broadcast by sensor unit 104c they retransmit this alarm message. In this manner sensor unit 104a in dwelling unit 101 may also receive the alarm message even if this sensor unit is out of range for the originating sensor unit 104d.

In addition, when a sensor unit 104 detects an alarm condition or receives a broadcast message indicative of an alarm condition in another sensor unit 104, a message may be sent over the second wireless interface to the wireless access point 105 that is part of the same dwelling unit and from there it may be forwarded to the back-end system server 107 over the wide area network 106.

Broadcast alarm messages as well as alarm messages transmitted over the wireless access points 105 may include information representative of the identity of the originating sensor unit 104 as well as additional information, for example of the type of alarm, the associated dwelling unit 101, 102, 103, as well as other information. The various sensor 104 may implement various rules for how and when to forward alarm messages over the two radio communication interfaces based on the nature of the alarm, whether the originating sensor unit belongs to the same or another dwelling unit, etc.

When the back-end server 107 receives a message indicative of an alarm status in one of the sensor units 104 it may transmit this information back to the other sensor units included in the same multi dwelling unit 100. This manner of relaying broadcast messages between sensor units 104 and transmitting alarm status information back to the sensor units 104 from the back-end server 107 provides redundancy both with respect to communication to the back-end server 107, which may play a role in the initiation of rescue operations, as well as with respect to propagation of warning messages in the form of audible and/or visual alarms signals in the respective dwelling units, which facilitates early evacuation for example in the case of a fire.

A more detailed description of the configuration and operation of the various parts of the system will be explained in further detail below.

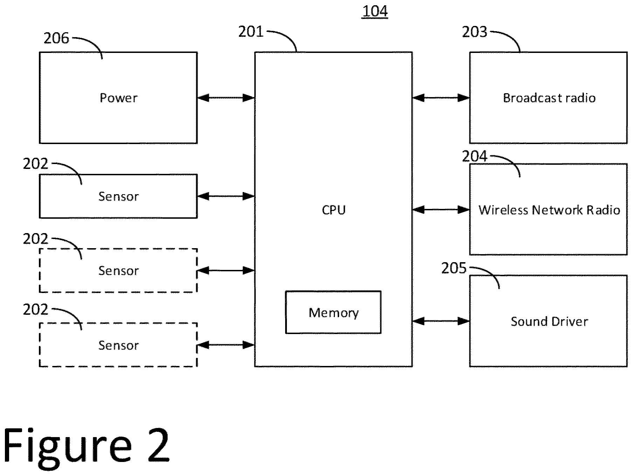

Reference is now made to FIG. 2 which is a block diagram of an embodiment of a sensor unit 104. At the heart of the sensor unit 104 is a central processing unit (CPU) 201, with associated electronic circuitry such as working memory, persistent memory, etc. The electronic components will not be described in detail, since they will be well known to those with skill in the art. The CPU 201 can be thought of as a small computer responsible for running the various processes that are handled locally in the sensor unit 104, including determining whether an alarm condition is present, whether to transmit alarm or status messages, and receiving and responding to requests. The CPU 201 may include software in persistent memory such as an EEPROM, but may also include application specific integrated circuits (ASICs) and/or field-programmable gate arrays (FPGAs).

The CPU 201 is in communication with one or more sensors 202. Each sensor 202 is capable of detecting or measuring a physical parameter or condition, such as smoke detection, temperature, humidity, motion, etc. One or more sensors may, not being part of the claimed invention, also be provided for receipt of signals for example from a remote control. The choice of which sensor or sensors to include is a design choice which can be made based on the requirements of a particular product series or a particular installation. The operation of the invention as such is not dependent on a specific choice of sensors.

In embodiments where the sensor unit 104 includes a receiver for a remote control, the remote control may be used to transmit commands to initiate a test or to mute (suppress) the alarm after it has been initiated, or to transmit settings, initiate sensor state and stop alarms. Test and/or mute functionality may also be available through buttons that are part of the hardware of the sensor unit 104.

The sensor unit 104 further includes a first radio communication interface unit in the form of a broadcast radio 203. The broadcast radio is connected to and controlled by the CPU and capable of transmitting broadcast messages when an alarm condition is present in the sensor unit 104, as determined by the CPU 201 based on data from the sensors 202. The broadcast radio 203 is also capable of receiving broadcast messages transmitted by other sensor units 104 that are part of the same multi dwelling unit. The communication standard implemented by the broadcast radio 203 may typically be one that operates in the 2.4 GHz and/or the 5 GHz band, or more generally any suitable frequency in one of the ISM bands (industrial, scientific and medical radio bands). Any suitable public standard such as for example Bluetooth, ZigBee, WiFi, may be used, as well as any suitable proprietary format. A proprietary format may be convenient in many circumstances, for example for security and reliability reasons, in order to optimize power consumption or range. A proprietary format may, for example, be based on one of the standards IEEE 802.15.1 or IEEE 802.15.4.

The sensor units 104 that belong to the same multi dwelling unit 100 may connect to each other in a peer-to-peer mesh network and relay messages using a flooding technique, although it is consistent with the principles of the invention to use other routing techniques.

A second radio communication interface unit is provided in the form of a wireless network radio 204. The wireless network radio 204 is configured to establish a link to a wireless access point 105 associated with the same dwelling unit 101, 102, 103 as the sensor unit 104. The wireless network radio 204 may again implement a 2.4 GHz or 5 GHz radio communication standard, including those listed above. For residential units a typical choice may be Wi-Fi (IEEE 802.11).

The invention is, of course, not limited to any particular radio format for the two radio interfaces, and while standards belonging to the IEEE 802.11 and IEEE 802.15 families have been mentioned, other alternatives include IEEE 802.16, often referred to as WiMAX, 4G/4G LTE routers, as well as other standardized or proprietary alternatives will be available to those with skill in the art.

While not strictly a requirement in all embodiments of the invention, a sensor unit 104 will typically include a sound driver 205 configured to issue an audible alarm or a spoken message upon detection of an alarm condition. A spoken message may include information about the type of alarm condition that has been detected and the location of the originating sensor unit 104. Alternatively, or in addition to the sound driver 205, a lamp capable of issuing a visual alarm signal may be provided.

The sound driver 205 may also be configured to control a light unit (not shown) such as a lamp. This lamp may serve to provide light in order to facilitate evacuation if an emergency should occur while it is dark, and also to provide a visible alarm.

Finally, the sensor unit 104 may include a power source 206. The power source may be one or more batteries, but it is also an opition to provide a sensor unit with, or connect it to, a solar panel, a wind generator, or the power grid. If the sensor unit 104 is connected to external power, batteries may still be provided and serve as a backup power source.

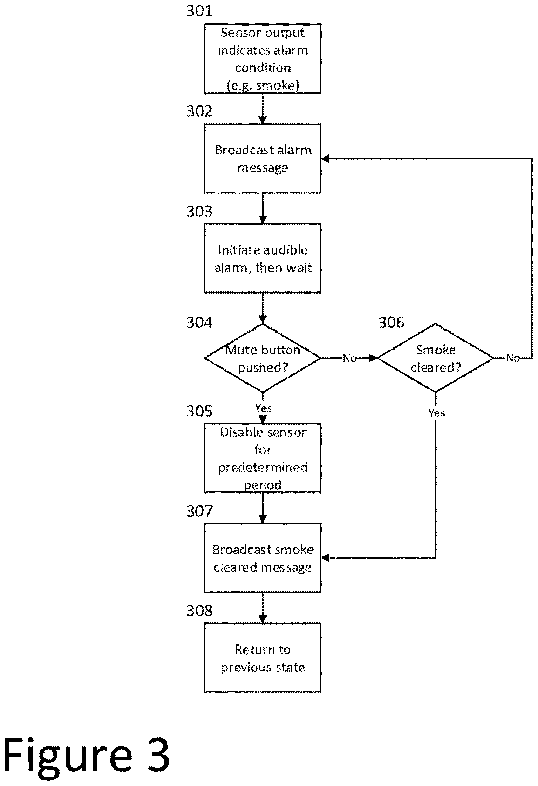

Reference is now made to FIG. 3, which is a flow chart illustrating a process performed in a sensor unit 104 when a sensor indicates the presence of an alarm condition. In this example the alarm condition is detection of smoke, but it could equally well be any other alarm condition detected by any other type of sensor. It should also be understood that the steps shown in the flowchart do not necessarily have to be performed in the sequence illustrated, except to the degree that they rely on output from a previous step. Some steps may be performed in a different sequence, or in parallel, and some steps may be combined into a single step. Thus, the strict sequential illustration given by the flowcharts are a result of convenience for the purposes of explanation, not by technical limitations of the invention.

In a first step 301 a sensor 202, in this example a smoke detection sensor, outputs a signal indicative of the presence of smoke. This signal is processes by the CPU 201 which determines that an alarm condition is present. The CPU 201 will then, in step 302, control the broadcast radio 203 and initiate broadcasting of an alarm message. This message may include an identification of the type of alarm, the identity and/or location of the sensor unit 104, and any other information that may be relevant. In some embodiments the alarm messages may include a flag indicating whether, upon receipt by another sensor unit, the alarm message should be acted upon immediately or only after a certain delay. This, along with other processing by a receiving sensor unit, will be described in further detail below.

Along with the broadcast alarm message, the CPU 201 may utilize the wireless network radio 204 to transmit an alarm message to a wireless access point 105, from where it will be forwarded over the network 106 to the back-end server 107. Processing by the back-end server 107 will be described further below.

Whether or not a condition or state is considered to be an alarm condition may be a question of terminology. Some sensor data may result in signals being transmitted or broadcasted even if they do not qualify as alarms. For example, sensor data regarding temperature or humidity may be transmitted to the back-end server 107 even if there is no critical condition present, for example at predetermined intervals. And some conditions may result in a higher alert status without initiating an alarm. For the purposes of this disclosure, however, all alerts that are transmitted by the system will be referred to as alarms, and this terminology is therefore intended to cover all scenarios that follow the same technical process or utilize the same technical features, irrespective of the actual content of the transmitted messages and the level of criticality associated with them.

In step 303 an audible alarm is initiated. This step may be performed prior to, or simultaneously with step 302. In some embodiments of the invention, not all alarm conditions require an audible alarm, and some conditions may not even be regarded as an alarm condition. Consequently, not all detected conditions have to initiate the same messages and alarms as those described in this example. Of course, it would be possible to design a system or individual sensor units that did not implement audible alarms and/or visual alarms at all.

After the audible (or visual) alarm has been initiated, the sensor unit 104 waits for further events. One event that may occur, in embodiments, not part of the claimed invention, that implement a mute button or function for example as a hardware button or a remote control, is that the mute button is pushed. If the CPU 201 receives a signal that indicates the occurrence of such an event, the audible alarm is muted and the sensor that delivered the alarm triggering signal, in this example the smoke detecting sensor, is disabled for a predetermined period of time. This function makes it possible to interrupt the further distribution of a false alarm through the network of sensor units 104, and to remove the cause of the false alarm. An example could be that the smoke alarm has been triggered by smoke from cooking of food. If this happens it is desirable to stop the alarm immediately and then have a predetermined time available for removing the source of the smoke and air out any smoke still present in the room.

Another event that may occur is simply that the smoke detecting sensor 202 no longer detects any smoke, as indicated in step 306. As long as neither of these events (or any other event that is included in the process and designed to interrupt or modify an alarm condition) occur, the process will remain in the waiting state as illustrated by a return to step 303, and the audible and/or visual alarm with continue to be active.

If either of the two events described above, i.e. a mute button is pushed or the smoke detecting sensor indicates that the smoke is cleared, the CPU will utilize the broadcast radio 203 to broadcast a smoke cleared message. A corresponding message will be transmitted over the wireless interface 204 to the back-end server 107. The sensor unit 104 will then return to its previous state, i.e. the state it was in prior to detecting the alarm condition, in step 308. In some embodiments the sensor unit 104 may instead return to a predefined initial state that disregards the previous state, or that for example involves system checks.

By returning to the previous state (or an initial state) all sensors will again be activated. Consequently, if the source that triggered the alarm has not been removed successfully, the alarm condition will be triggered again.

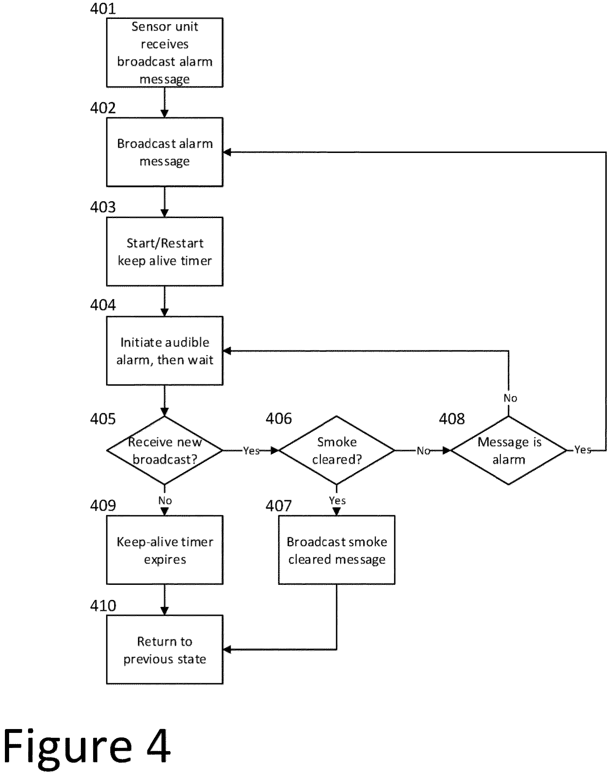

Turning now to FIG. 4 a description will be given of a process performed by a sensor unit that receives a broadcast alarm message from another sensor unit in the same dwelling unit, such as e.g. 104c and 104d in FIG. 1.

In a first step 401 the sensor unit 104 receives a broadcast alarm message from another sensor unit which is part of the same dwelling unit. In the embodiment illustrated in this flowchart, the process then moves to step 402 where the broadcast alarm message is immediately retransmitted as a broadcast message. In alternative embodiments this step may be postponed until after expiry of a delay, but it may be advantageous to distribute alarm messages as fast as possible, and instead implement any delay only with respect to whether or when an audible and/or visual alarm is activated.

At the same time a corresponding message may be sent over the wireless network radio 204 addressed to the back-end server 107.

The distribution of alarm messages may follow a number of strategies that in themselves are well known in the art. As already mentioned, flooding may be used, in which case all sensor units retransmit all messages they receive, provided they have not already done so (in order to avoid endless loops). It is also possible to implement various methods for limiting retransmission, such as adding a retransmit counter to each message and incrementing this counter each time the message is rebroadcast. Messages with too high counter number may then be discarded rather than retransmitted. Another alternative is to add a time stamp to the message and maintain a list of retransmitted messages, for example in the form of a first in first out (FIFO) buffer, in each sensor unit. Each time a sensor unit receives a broadcast message it may then check its identity versus the identity of already retransmitted messages in the buffer using the time stamp and the identity of the originating sensor unit. If the message is found in the list of already retransmitted messages it may be deleted rather than retransmitted.

Various schemes and rules for routing of messages is also possible, but goes beyond the scope of this disclosure since they are well known in the art and are not part of the invention as such.

In some embodiments of the invention the messages may include various flags, for example a flag indicating whether the message should be acted upon immediately or only after a certain delay. This flag may be set prior to retransmission based on rules regarding what the message contains and how it has been processed (e.g. already delayed) in a previous sensor unit.

The sensor unit now starts a keep alive timer (or restarts it if it was already started) in step 403. The keep-alive timer represents a time out function for alarm conditions in sensor units 104 that have been triggered by another sensor unit rather than by one of their own sensors. The keep alive timer starts counting down towards zero (or up towards a predetermined value).

In step 404 an audible and/or visual alarm is triggered. The steps 402, 403 and 404 are all initiated by the receipt of a broadcast message in step 401, and they do not depend on output from each other. Consequently, they may be performed simultaneously or in any other sequence than the one illustrated in the drawing.

The sensor unit now has an active audible and/or visual alarm and a keep-alive timer that is counting, and it starts waiting for any event that may change its state. The drawing illustrates four such possible events. Additional events may be included in some embodiments of the invention.

As illustrated in step 405, the sensor unit 104 may receive a new broadcast message. That message may be a smoke cleared message, as determined in step 406, in which case the smoke cleared message is rebroadcast in step 407 by the sensor unit 104. This corresponds to the broadcasting of a smoke cleared message in step 307 illustrated in FIG. 3.

The new broadcast message may also be a new alarm message, as determined in step 408, for example from a different sensor unit 104 from the one that transmitted the first broadcast alarm message. If that happens, the process may return to step 402 where the new alarm message is rebroadcast by the receiving sensor unit 104 in order to propagate further. Also, the keep-alive timer may now be restarted or reset, since the alarm condition should time out in the receiving sensor unit 104 based on the receipt of the latest alarm message, not the first.

A third possibility is that the newly received broadcast message is neither a smoke cleared message nor a new alarm message (i.e. any broadcast message that does not relate to the ongoing alarm condition). This message may be processed by the CPU 201 and may be acted upon accordingly, but it will not play a role with respect to the process illustrated in FIG. 4. Consequently, the process will return to step 404 and continue to wait.

A fourth possibility is that no further broadcast message is received and the keep alive timer expires in step 409, in which case the audible and/or visual alarm will be turned off. The sensor unit 104 will then return to its previous state in step 410, or any other post-alarm state that has been defined.

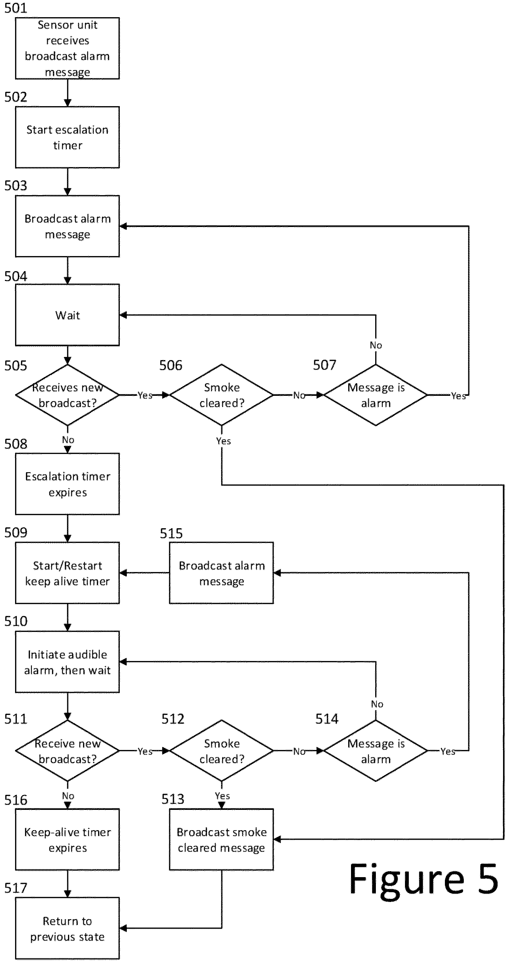

With reference to FIG. 5, a description of a process flow in a sensor unit 104 that receives a broadcast alarm message from a sensor unit belonging to a different dwelling unit in the same multi dwelling unit will be described.

The process largely parallels the process described with reference to FIG. 4. However, the differences are based on the assumption that in many situations a simultaneous triggering of the same alarm condition in all sensor units belonging to the same dwelling unit will be preferable, but the same may not be the case across dwelling units. For example, if a false alarm is triggered in an apartment, the owner of that apartment may want to be alerted to that fact immediately regardless of where they are in their apartment. The same may not be the case for the neighbor living in the apartment next door. So rather than immediately triggering alarms across every apartment in a building, any person in the apartment from which the alarm originated should have a chance to cancel a false alarm and remove the reason that triggered the alarm in the first place (for example bread in a toaster), without initiating an immediate evacuation of the building.

Consequently, after a sensor unit 104 receives, in step 501, an alarm message that originated in a different dwelling unit (as determined from information included in the broadcast message), an escalation timer is started in step 502. Escalation is the term that will be used herein for the activation of audible and/or visual alarms across dwelling units. (Propagation of broadcast messages across dwelling units is not escalation.)

The receipt of the broadcast message in step 501 also causes the sensor unit to retransmit the message (modified if the specific embodiment requires this, for example in order to regulate retransmission) in step 503. The process then waits, in step 504, for any event that causes a change.

A first possible event is the receipt of a new broadcast message, as determined in step 505. If it is determined in step 506 that the received message is a smoke cleared message the process proceeds to step 513 where the smoke cleared message is retransmitted.

If the received broadcast message is a new alarm, as determined in step 507, the process returns to step 503 and retransmits (broadcasts) the received message. It should be noted that the escalation timer is not restarted. The receipt of subsequent alarms should not postpone the escalation of alarms across dwelling units.

If the received message is any other message, i.e. any message that does not influence the progress of this particular process, the sensor unit 104 returns to step 504 and waits for further events.

Unless a smoke cleared broadcast is received in step 506 (one smoke cleared message will be required for each received alarm with a unique origin), the escalation timer will eventually expire in step 508. When this happens, the progress substantially parallels the progress described with reference to FIG. 4. Indeed the two processes could have been illustrated in one flow chart with a decision made immediately upon receipt of the first broadcast message in step 501 with a branch down to step 515 if the message originated in the same dwelling unit and an alternative branch to step 502 if the message originated in a different dwelling unit.

Consequently, after expiration of the escalation timer in step 508, the keep alive timer is started in step 509 and the audible alarm is activated in step 510, whereupon the sensor unit 104 waits for any event to change its state. If it is determined in step 511 that a new message is received, and that message is determined in step 512 to be a smoke cleared message, the smoke cleared message is rebroadcast and the sensor unit returns to its previous state 517, as described above. Otherwise, if the received broadcast message is a new alarm that alarm message is broadcast in step 515 and the keep alive timer is restarted in a return to step 509. If the received message is not a message that is relevant to this process, the sensor unit resumes waiting, as illustrated in step 510.

If the keep alive timer expires in step 516 without any further events, the sensor unit returns to its previous state 517.

The processes described with reference to FIG. 4 and FIG. 5 discuss receipt of broadcast alarm messages. However, in some embodiments a similar process can be initiated by receipt of alarm messages from the back-end server 107. In other words, a first sensor unit 104d may transmit a message describing an alarm condition using the wireless network radio 204. When the message is received by the back-end server 107 it may be forwarded to other sensor units 104a, 104b, 104c, where they can be acted upon in the same manner as if they were received as broadcast messages. However, it is in accordance with the invention to implement different rules for messages received by broadcast and messages received over the network 106 from the back-end server 107.

Some embodiments not part of present claimed invention may also enable an operator of the back-end server 107 to initiate and transmit control messages including mute commands and smoke cleared messages from the back-end server 107 to one or more of the sensor units 104.

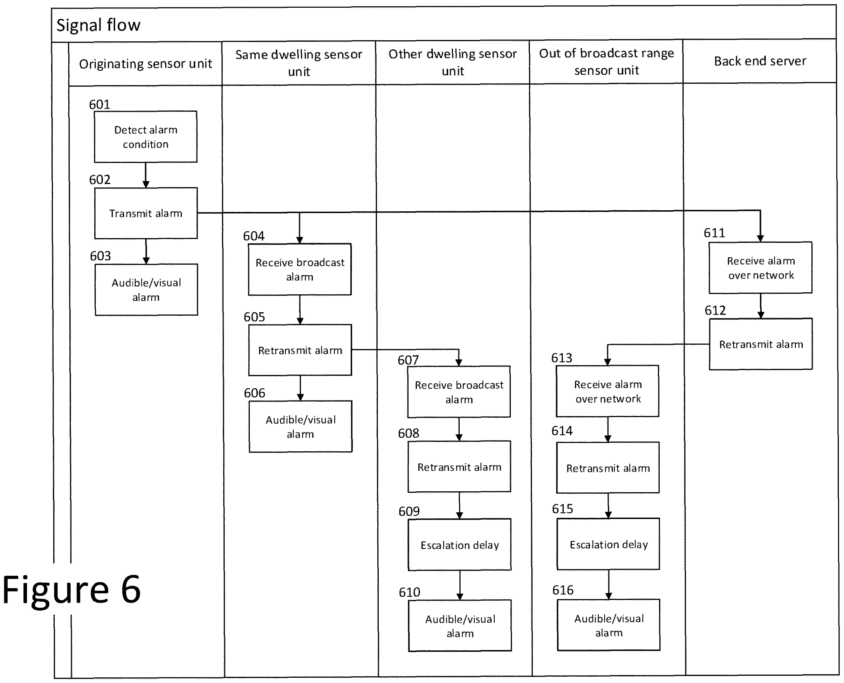

The flow of signals, such as messages and commands, between the various units in the system will now be described with reference to FIG. 6. The illustration in FIG. 6 is an example of how information may flow in a particular system, and is not intended to be interpreted as the only possible signal flow neither in this particular example of system devices nor in accordance with the invention in general. Specifically, in order to avoid unnecessary clutter, only messages that represent information that has not already been received by the receiving device are illustrated. Additional messages may be transmitted in the system without being illustrated in the drawing.

In a first step 601, an alarm condition is detected in an originating sensor unit 104. As described above this sensor unit will immediately broadcast an alarm message in step 602 and simultaneously transmit an alarm message over the computer network 106. The sensor unit will also initiate an audible and/or visual alarm 603 as has already been described above.

The broadcast message, which may include a representation of the identity of the originating sensor unit as well as the dwelling unit to which it belongs, is received in step 604 by a different sensor unit 104 in the same dwelling unit. This first receiving sensor unit will immediately retransmit a broadcast of the received alarm in step 605 and initiate an audible and/or visual alarm in step 606. Step 605 will typically also involve a message sent over the network 106 to the back-end server 107. This message is not illustrated in the drawing in order to avoid unnecessary clutter.

In the illustrated example it is assumed that a sensor unit in a different dwelling unit is out of range of the originating sensor unit, but within range of the second sensor unit. This second receiving sensor unit will not receive the message that is broadcast by the originating sensor unit, but it will receive the retransmitted broadcast from the first receiving sensor unit, in step 607. The second receiving sensor unit will immediately retransmit the received message in step 608, as a broadcast message and as a message that is sent over the computer network 106 to the back-end server 107. These retransmissions are not illustrated as signals, since they only replicate that which has already been described above. After retransmitting the alarm message, the second receiving sensor unit waits 609 for the escalation timer to time out, as described above, and upon expiry of the escalation delay, it initiates an audible and/or visual alarm in step 610.

The back-end server will, after receiving an alarm message over the computer network 106, determine whether it is a new message and not only a result of a retransmission of a message that has already been received. If it is a new message, the alarm will be retransmitted in step 612 over the computer network 106 and addressed to all sensor units in the multi dwelling unit. (Alternatively, rules may be implemented for selection of subsets of alarms, for example in cases where the multi dwelling unit comprises several buildings and it is desirable to raise the alarm only in the building in which the alarm condition originated.)

The drawing does not illustrate the propagation of messages to all the sensor units identified in the drawing, although it may be considered convenient, and even expedient, to transmit messages to all sensor units in order to increase reliability and thus security through redundancy. The drawing shows how a third receiving sensor unit is out of broadcast range of all the other sensor units. If this is the case, the sensor unit will still receive the alarm message as long as it is online with the back-end server 107. In step 613 the third receiving sensor unit receives the alarm message transmitted over the network 106 and its associated wireless access point 105. The third receiving sensor unit will then be able to initiate the same process as described above. In particular, it may retransmit the alarm message in step 614, wait through the escalation delay 615 and then initiate an audible and/or visual alarm.

By consistently treating incoming alarm messages, whether they are received as a broadcast or as a network message, as a new alarm that needs to be retransmitted (except in cases where rules defining exceptions are implemented), a system according to the invention is able to bridge discontinuities in the connectivity of one type. As such, sensor units that are offline (i.e. not in contact with the back-end server 107) may still receive a broadcast message from a neighboring sensor unit, and sensor units that are out of broadcast range of all other sensor units may still receive an alarm message from the back-end server.

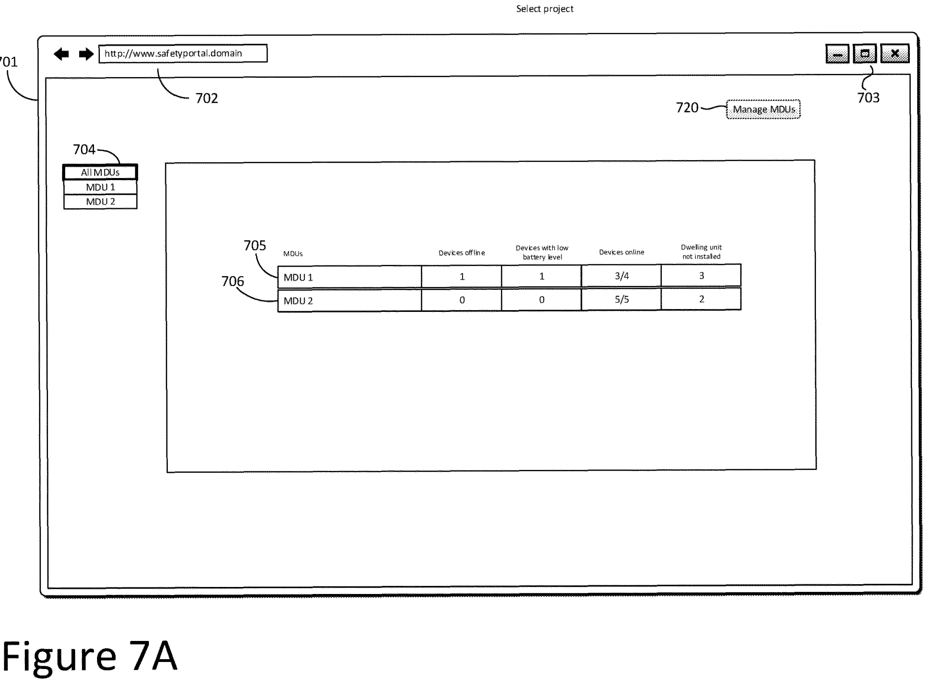

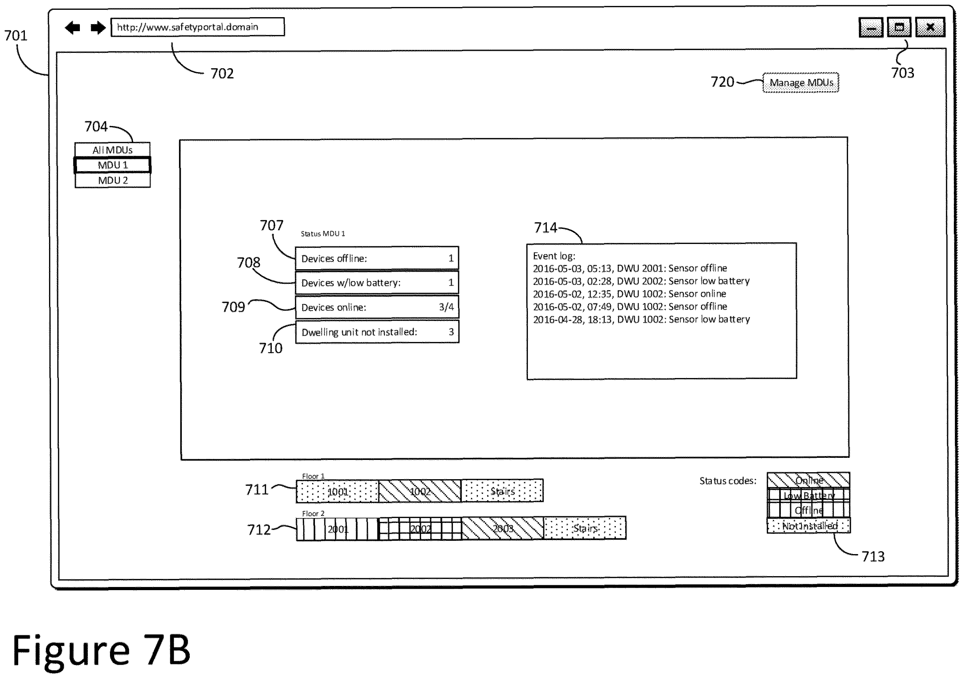

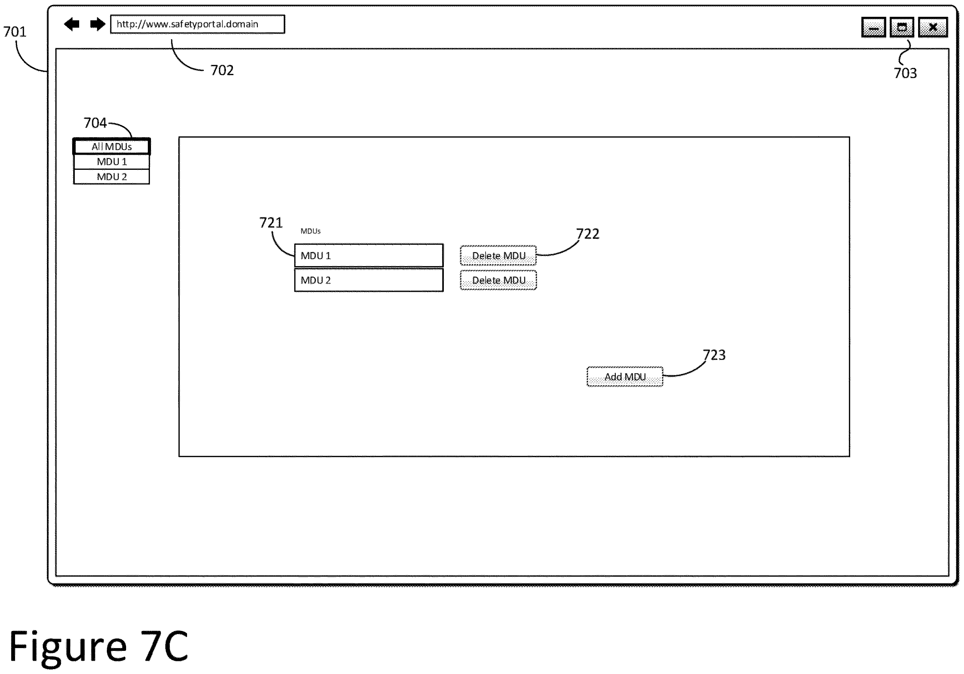

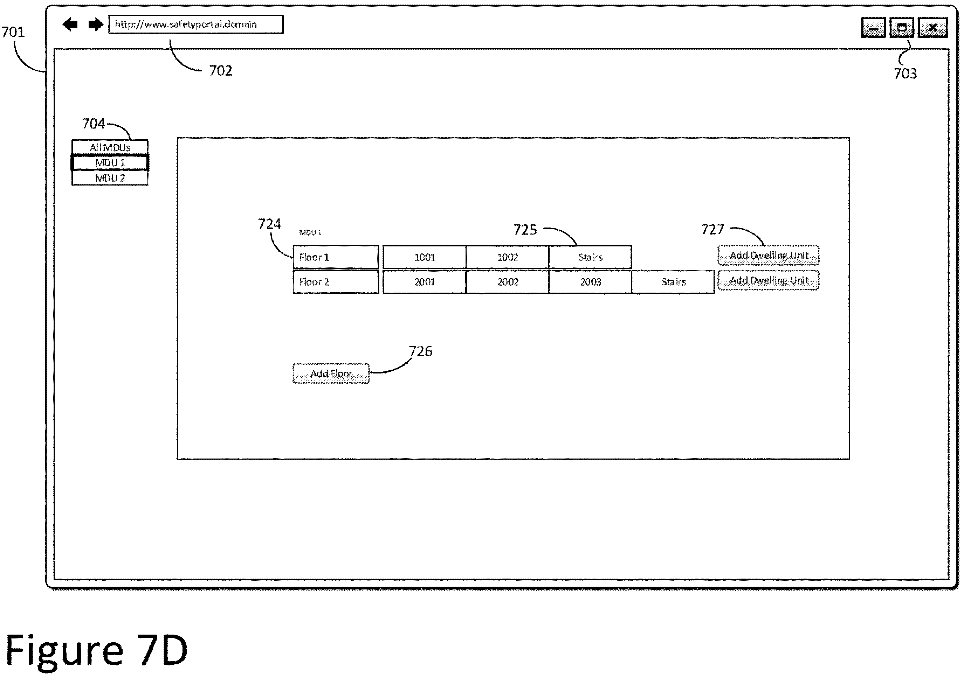

Reference is now made to FIG. 7, which shows a plurality of views of a user interface for a portal provided by the back-end server 107. The embodiment illustrated in FIG. 7 shows the portal as presented in a desktop web browser window 701, although in other embodiments a native client application or smartphone app could provide the same or similar functionality. In either case the client application, whether it is a generic web browser or a native application, is installed on a client device 109 and data is provided by the back-end server 107, which in the current example may be assumed to include a web server. Thus the data presented in the illustrated user interfaces are stored in the back-end server along with similar data for all multi dwelling units and their corresponding sensor units that are administered from the back-end server 107. The data may, for example, be stored in database 108.

In the first view shown in FIG. 7a, the browser window 701 includes an address field 702 which may be used to enter an address, such as a URL (uniform resource locator) which can be used by the web browser to send a request to the back-end server 107, typically using protocols like TCP/IP and HTTP. These protocols are so well known in the art that they will not be described further, although it should be understood that the invention can be implemented using other communication protocols as well. Typically, the browser window 701 will also include controls 703 for maximizing, minimizing, restoring and closing the window.

Inside the actual viewport of the browser window, i.e. the part of the browser window where received content is displayed, the data provided by the back-end server 107 can be rendered. The data may be formatted and described using protocols and standards like HTML, XML, CSS, JavaScript, and other well-known web programming and publishing tools. Again, these are so well known in the art that they will not be described in any detail herein.

The view illustrated in FIG. 7a includes three links 704 which can be used to invoke a view presenting a summary of data for all connected multi dwelling units, as well as views presenting more specific data for individual multi dwelling units. In some embodiments the portal provided by the back-end server 107 simply provides access to all the multi dwelling units it administers. In other embodiments the back-end server 107 may serve as host for a number of multi dwelling units that are not necessarily administered by the same users or administrators. Consequently, the multi dwelling units that are selectable by the links 704 may be a function of the access rights of the user that is logged on.

In the view shown in FIG. 7a, the summary for all multi dwelling units (All MDUs) is selected, and this information is presented in a table with two lines. In line 705 the data for the first multi dwelling unit is shown, while in line 706 the data for the second multi dwelling unit is shown. For simplicity this example only includes two multi dwelling units. In this example, the information displayed in the summary view is the number of devices that are offline, the number of devices with a low battery level, number of devices that are online and total number of devices, and the number of dwelling units without an installed device. The devices can be assumed to correspond directly to the sensor units described above. However, other devices may also be included in this overview. For example, units with only alarms, but without sensors, units with escape lights, units that play audible evacuation instructions etc. may also be among the devices with a status that is registered by the back-end server 107 and may be presented in the views illustrated in the examples in FIG. 7 or other views provided by the back-end server 107.

In the example provided in the drawing, in multi dwelling unit 1 one device is offline, one device has a low battery level, three of a total of four devices are online, and there are three dwelling units where no devices are installed. In multi dwelling unit 2 there are no devices that are offline, no devices with low battery level, all five installed devices are online, and two dwelling units do not have an installed device.

A button 720 can be used to open a different view which may be used to manage the MDUs the user has access to. This will be described in further detail below.

In FIG. 7b, the multi dwelling unit identified as MDU 1 has been selected, something that may have been done by the user by clicking on one of the links 704. In this view, more detailed information about the selected multi dwelling unit. The information that was available in the overview in FIG. 7a is, in this example, repeated in this view. In particular, the number of devices that are offline 707, the number of devices with low battery 708, the number of devices that are online and total number of devices, and the number of dwelling units without an installed device 710, are shown.

In two rows further down on the web page the status of each individual dwelling unit can be found. In the first row 711 the dwelling units on the first floor are shown. Their status may be represented by a color. In the drawing these colors are instead represented as patterns. Thus, on the first floor it can be seen that no device has been installed in dwelling unit 1001 and in the stairwell. The device in dwelling unit 1002, on the other hand, is online. It should be noted that for the purposes of this disclosure stairwells and other shared or common areas are not distinguished from apartments, and all are referred to as dwelling units. The invention allows for introduction of specific rules that can be applied to the administration of devices that are installed in common areas. In particular, sensor units that are installed in common areas may apply different rules with respect to, for example, escalation.

On the second floor 712, the device in dwelling unit 2001 is offline, the device in dwelling unit 2002 has a low battery, and the device in dwelling unit 2003 is online. Again, there are no installed devices in the stairwell. An explanation of the various color codes are given in a separate area 713 of the web page.

Finally, this web page presentation of the status of a multi dwelling unit provides the latest entries 714 in a log of events. In particular, this log shows that a sensor in dwelling unit 1002 went offline after first having a low battery, but came back online again - presumably because the battery was changed. The sensor in dwelling unit 2002 has reported a low battery status, and the latest event was that the sensor in dwelling unit 2001 went offline.

The back-end server 107 can also be used to administer connected multi dwelling units, including creating new multi dwelling units, adding and removing dwelling units to the multi dwelling units, adding and removing devices, including sensor units, to dwelling units, and performing other administrative tasks such as configuring individual devices, receiving sensor data etc. Such additional tasks are not part of the claimed invention.

Reference is made to FIG. 7c, which shows a view of the user interface wherein a user can delete or add multi dwelling units. This view may be opened by clicking on the "Manage MDUs" button 720 shown in FIG. 7a and FIG. 7b. It will be readily understood that the configuration of the different views for adding or modifying multi dwelling units may vary considerably without abandoning the principles of the invention. In the illustrated example, selection of the "All MDUs" alternative from the menu on the left 704 will show an overview of all MDUs 721 and include buttons that enable the user to delete 722 existing MDUs or create new ones 723.

Selecting a specific multi dwelling unit from the menu 704 on the left while in the managing view shown in FIG. 7c will change the view to the view shown in FIG. 7d. This view provides the user with the ability to configure the multi dwelling unit, and may be the same view that is displayed if the user clicks on the "Add MDU" button 723 in FIG. 7c, but in that case with an added entry in the menu 704 on the left.

The view shown in FIG. 7d includes an overview of the floors 724 included in that multi dwelling unit, and an overview 725 showing each dwelling unit on each floor. When a multi dwelling unit is first created this overview will, of course, be empty with no floors and no dwelling units. Consequently, the first thing that should be done after a new multi dwelling unit has been created is to add one or more floors. This can be done by clicking on the "Add Floor" button 726, which may open a dialog window that enables entry of more specific information, depending on implementation details for the specific embodiment of the invention.

As soon as at least one floor has been added, dwelling units may be added by clicking on an "Add Dwelling Unit" button 727. In the example shown in the drawing there is one such button (or link) for each floor, but there could equally well be only one button or link for adding dwelling units, and the correct floor could be an available choice in the subsequent dialog window. Editing or deleting existing floors or dwelling units may be done by clicking on the representation of the floor in the overview of floors 724, or on the representation of the dwelling unit in the overview of dwelling units 725. (Note that again common areas like stairs are treated as if they were dwelling units for purposes of the configuration described here.)

When a dwelling unit has been created, it may be associated with additional information such as description, apartment number, name and contact information of contact person, names of residents, etc. Exactly which information a particular embodiment of the invention allows a user to add is a design choice that may be determined by the designer of a particular embodiment of the invention or the particular installation in a multi dwelling unit.

Contact information for contact persons may include electronic communication addresses such as cellphone numbers, email addresses, instant messaging addresses etc., in which case the back-end server 107 may be configured to forward alarm messages to contact persons.

Adding such electronic contact information may also result in a message being transmitted to that electronic address with information to the contact person regarding their role, how they can interact with the system, availability of applications or apps that can be used to access the system etc. Such messages may be received by contact persons on client devices 109 which may include personal computers, smartphones and similar devices.

The information provided in the various views of the user interface may, of course, vary in different embodiments. The examples illustrated herein are therefore only intended as illustrations that will facilitate understanding of the principles of the invention. It is thus consistent with the principles of the invention to present another selection of data in a particular view, to move certain types of information to a different view, to combine several views into one or divide one view into several. The same can be said for the layout of the presented information, which in principle can be positioned anywhere inside the part of the display controlled by the client application.

After dwelling units have been created, sensor units can be added to the dwelling units. This may be implemented in a number of different ways. Some embodiments may enable manual registration using the portal, for example by entering the media access control address (MAC address) of a sensor unit manually. However, it may be more convenient and more secure to allow a sensor unit to connect to a wireless network 105 in a dwelling unit and announce its presence to the back-end server, which may add the sensor unit based, for example, on the identity of the wireless network to which it is connected. In some embodiments confirmation may be required, either by an administrator logged in to the portal or by a contact person for the dwelling unit, for example through use of a client device 109 with a client application or app installed.

The unique identity of the sensor unit provided by the MAC address or by similar means may also be used to ensure that only authorized sensor units are connected to the system. For example, if the back-end server 107 and associated monitoring and rescue services, are provided by a security company or insurance company, this provider may want to limit access to units they have delivered themselves, for purposes of having control over security related functionality, or simply to have control of the revenue generated by sales and operation of sensor units. In any case, the registration of sensor units with unique identities in the back-end server 107 ensures that any incoming message received by the back-end server 107 can be associated with a dwelling unit.

The message format for the messages that are sent from the sensor units both as broadcast messages and as messages addressed to the back-end server will now be described. It will be realized that the specifics of the message format may vary considerably between various embodiments. The parts of the message that is determined by lower layers in the protocol stack will not be discussed, since they have no direct relevance to the invention as such, except that protocols that contribute to high security, range and reliability as well as low power consumption, may be preferred, depending on requirements. The following disclosure will focus on application layer provided by the invention. Even on this layer a lot of choices may be made with respect to such things as packet size, error correction codes etc., and the description will therefore primarily describe which information a message may contain, and not the exact format that information will have.

As already described, a sensor unit 104 belongs to a dwelling unit 101, 102, 103, which again is part of a multi dwelling unit 100. Each sensor unit has a unique identity, and includes information in memory identifying the dwelling unit and multi dwelling unit to which it belongs. This information is included in the messages and is also used when receiving messages that have been broadcast from another sensor unit 104 or relayed via the back-end server 107. Thus, a message, whether it is broadcast to other sensor units 104 or addressed to the back-end server 107, will include an identification of the originating sensor unit, the dwelling unit in which the sensor unit is installed, the multi dwelling unit the dwelling unit is part of, and a time stamp. Some embodiments may also include sensor data, for example a measured value for smoke density, temperature, humidity or any other value the sensor unit is capable of measuring.

As mentioned above, the time stamp and originating sensor unit may be used to uniquely identify the message. Furthermore, the identification of the dwelling unit can be used by a receiving sensor unit to determine whether to immediately initiate an audible and/or visual alarm or to first start an escalation timer. Since the information that identifies the dwelling unit follows the message whether it is broadcasted or transmitted via the back-end server 107, or both, the way a sensor unit handles a received message is not dependent of how the message has been transmitted and how it has propagated through the system.

The inclusion of sensor data in the message can be utilized for several purposes. Sensor data may be transferred to the back-end server 107 at regular intervals or upon request from the back-end server 107 and used to establish a baseline representing sensor values during a normal situation. This can be used to calibrate the sensors, to detect faulty detectors, or to detect anomalous situations that do not rise to the level where they trigger an alarm. Furthermore, during an alarm, for example a fire, it is likely that smoke penetrates several rooms in several dwelling units and consequently that alarms are triggered in several sensor units. Sensor data can then be used to establish an assessment of where the fire has spread, where it is most intense, and how smoke propagates through the building. This information can be valuable for fire emergency personnel when planning fire containment, extinguishing, and evacuation.

Collection of senor data in case of a smoke alarm may, for example, be utilized on a single unit level and a multi-unit level. Based on data from a single unit, it may be determined how a fire evolves. An interpretation of a time series of sensor data from a smoke chamber in the sensor unit will be indicative of how fast a fire is evolving and if it is likely it is explosive. Similarly, temperature and humidity curves may also represent valuable indication of the seriousness of a situation.

Taking data from multiple sensor units into consideration, aggregated information may be indicative of the situation in, for example, an entire building, and relevant information about the incident on a building level may be communicated to rescue personnel as well as to residents and other parties of interest. Sensor data can give the residents and rescue team additional information about the fire and the building. For example, if a fire spreads in the building, it can be determined in which order the fire is triggered in the building, or how it is spreading. Reading smoke and temperature values from all sensors in the building the safest passage, or escape route, out of the building can be determined. In embodiments where the sensor units include motion sensors, registering movement can be used to establish assessments of where there has been or is activity and where it is likely that people still may be trapped inside the building. Finally, the settings of sensor units, for example activation of burglar alarm functionality associated with motion sensors or sensors detecting opening of doors and windows, may be indicative of whether people in a dwelling unit are at home, have gone to bed, or are not at home.

Thus, the provision, collection and processing of sensor data from one or several sensors is an aspect of the present invention that facilitates warning, evacuation, rescue and other relevant operations in an emergency situation, more efficient management of a system, and analysis of events after the fact, for example for the benefit of improved security in the future or for insurance companies. It is possible to include processing capabilities in the back-end server 107, but in some embodiments it may be desirable to provide the sensor units themselves with at least some data processing capabilities. The algorithms used to process data will depend on which data the sensors provide in a particular embodiment and what it is desirable to derive from the data. Consequently, while the invention provides a platform for provision of such data and a platform for processing and presenting the results of such processing, it is not part of the invention as such to provide specific algorithms for processing of sensor data.

An example of an alarm message format for a smoke alarm, i.e. an alarm initiated by a sensor unit in which a smoke detecting sensor has detected the presence of smoke with a measured value high enough to trigger an alarm condition, will now be described in the form of a list of values that may be included in an alarm message. It is not mandatory for all embodiments of the invention to include all these parameters and measured sensor data values. Instead, which parameters to include may depend on the properties of the sensor or sensors included in the sensor unit, the requirements of a particular system, and other factors a designer of a particular embodiment might decide to take into consideration. Similarly, the organization of the different fields of the message format and the amount of bytes allocated to each field is also dependent on design choices and requirements specific to a particular situation or embodiment.
- Device ID: Unique identification of the sensor unit from which the message originated - can be associated with a dwelling unit in the back-end server
- Time stamp: Identifies the point in time at which the alarm message was created - together with the device ID the time stamp provides the message with a unique message ID
- Command: Smoke - this command describes the type of alarm (smoke in this example)
- Motion alarm state: In embodiments of the invention where sensor units includes motion sensors, this field in the alarm message shows whether the motion detector was activated at the time the smoke alarm was detected - this information can be used to make an assumption regarding the presence of people in the dwelling unit
- Smoke zero level: Smoke detection sensor value when no smoke is present - a baseline with which the current smoke detection level can be compared
- Smoke current level: Current smoke detection sensor level
- Smoke peak level: Highest level of smoke since last report
- Temperature: Current temperature from sensors units that include temperature sensors
- Battery: Current battery level of sensor unit
- Humidity: Current relative humidity
- Rssi: Connectivity value for WiFi, i.e. a measure of the quality of the connection between the sensor unit 104 and the wireless access point 105
- If the message has been relayed by a sensor unit which is not the originating sensor unit, the ID of the relaying sensor unit may be appended to the message

The various views shown in FIG. 7 may, as already mentioned, be generated by a web server component in back-end server 107. Back-end server 107 may include one or more processors in one or more server computers, and may include or be in communication with a database 108. In order to communicate with the sensor units 104, over the access points 105 or with the client devices 109, the back-end server must be connected to the network 106, and for that purpose it will include at least one communication interface. It will also include memory, including working memory, persistent memory, hard drives, or any combination of these. This memory holds instructions allowing the back-end server 107 to operate in accordance with the invention and to store the relevant data in an appropriately formatted manner. These components are well known to those with skill in the art and have not been included in the drawings.

In its own memory or in the database 108 or in a combination of these, the back-end server 107 will hold a representation of one or more security groups. If the system is only set up to administer one security group, its definition may be implicit in the sense that there may not be a specific representation of a security group ID. Otherwise, each security unit will be uniquely identifiable and uniquely represented. Furthermore, the memory will hold a list of a plurality of security zones, a list of a plurality of sensor units, a registry of first associations associating each security zone with one security group, and a registry of associations associating each sensor unit with one security zone. The representations and lists can have any format known in the art and found convenient by a system designer, for example in the form of database tables in a relational database, classes and objects in an object oriented programming language, as well as variables and arrays.

The memory will also hold instructions in the form of machine executable computer code enabling the data processing unit to receive, process and retransmit alarm messages. When alarm messages are received, information describing an alarm condition, and any additional sensor data if present, as well as information identifying the sensor unit which detected the alarm condition will be extracted from the message and stored.

The program code installed in the back-end server 107 may also include instructions for generating the various views shown in FIG. 7. In addition, the back-end server may include a list of people and their contact information, such as phone numbers, email addresses etc. This information may be used to transmit messages to users when requested or when alarm conditions are present. Users may have administrative roles for entire security groups or they may be associated with individual security zones. Additional people may be added and associated, not with security zones directly, but with other people. As such, an alarm pertaining to a security zone with which a give person is associated can be forwarded to people associated with that person. This enables for example inhabitants of a dwelling unit to define their own group of people that will be automatically contacted if an alarm is triggered.

After the back-end server has received a plurality of alarm messages from one or more of said sensor units, it may be programmed to process alarm conditions and sensor data extracted from the plurality of alarm messages to determine how the situation within one security zone or in the security group as a whole develops over time and is distributed in space, for example how smoke propagates through a building.

Having thus described how the various components of a system may interact, reference is again made to FIG. 2. As mentioned above, the CPU 201 may include or be associated with working memory and persistent memory. In some embodiments the persistent memory may be accessed by the user, for example indirectly by first accessing appropriate functionality provided by the portal on the back-end server 107, and various configuration values and parameters stored in the persistent memory may be changed. In some embodiments sensor units may also, or alternatively, be configured using a remote control which is able to communicate with the sensor unit over a short range communication interface, for example an infrared sensor in the sensor unit 104. In some embodiments, sensor units may include an embedded web server application which is capable of providing a configuration user interface which may be accessed by web browsers on devices connected to the same wireless access point 105.

Among configuration values that may be included in a sensor unit are
- Device ID: The unique identification of the sensor - in some embodiments of the invention this identity may be configurable
- MDU ID: The unique identification of the multi dwelling unit to which the sensor unit is assigned - in order to make it possible to assign and reassign a sensor unit to different multi dwelling units, this value must be configurable
- Dwelling unit ID: This is the unique identification of a dwelling unit (or common area). Again this value must be configurable in order to make it possible to assign and reassign sensor units to different dwelling units. The value is used to distinguish between communication of messages within a dwelling unit and between dwelling units (used, e.g., for escalation, as described above), to determine which dwelling unit an alarm has originated in the back-end server 107, to forward alarm messages to appropriate contact persons, etc.
- MDU common area: This may be a flag that identifies a sensor unit as installed in a common area and not a residential dwelling unit. It may, for example, be used to determine escalation.
- Broadcast to MDU: This may be a flag that determines whether a sensor unit should broadcast outside its own dwelling unit. This flag may be appended to the data format of messages described above, and used by sensor units in other dwelling units to determine whether they should receive or ignore the message.
- PIN code: A pin code that can be used to enable receipt of instructions from a remote control.
- Pir-control: A sensitivity level for the motion detection sensor (if present) can be used to ignore irrelevant motion, for example pets.
- Motion interval: A time interval between reports of detected motion. This value is used to limit transmission of detected motion, which would otherwise drain too much power when people are continuously moving around in the area.
- Motion interval PS: As above, but used if the sensor device is connected to external power supply and power consumption is not a problem.
- Motion sensor: A value representing whether the motion sensor (if present) should be turned on or off. In areas where motion detection is not worth the increased cost in power consumption resulting from frequent reporting of detected motion, this sensor can be turned off.
- Motion count down: Time from motion is detected to alarm is triggered. This value is used to set burglar alarm time out.
- Status interval: How often the smoke alarm should communicate with the server if everything is ok. Used to limit power consumption.
- Status interval ps: As above, but used if the sensor device is connected to external power supply and power consumption is not a problem.
- Smoke escalation: Time from receiving a remote smoke alarm over radio in another home before the local audible/visual alarm is activated. This setting can be set differently based upon the buildings structure. So, a different setting would be used on a building of concrete compared to a wood construction. A building with elderly could also alarm faster if they need longer time to get out.
- Smoke keep alive: This is the amount of time a sensor unit keeps the alarm active if it has been triggered by a received alarm message. Thus, if the originating sensor unit is reset, the smoke is cleared, or a user removes the batteries from the originating unit, which consequently stops sending out alarm messages, the sensor units triggered by alarm messages will stop their alarms a time period after the last received messages defined by this value.
- Smoke desensitize: If there is a smoke alarm and the user click the test button the alarm will stop and be disabled for the period defined in this value
- Smoke mute: This is the amount of time a sensor will be muted if a user clicks the test button on a device that have received an alarm from a different device
- Led brightness: How bright the light should be on devices connected to power supply
- Thermal interval: The interval between readings of temperature and humidity sensors (if present) in seconds.
- Thermal interval ps: As above when the sensor unit is connected to external power supply.
- Common escalation: The time from receiving a remote smoke alarm over radio from a common area device before the audible/visual alarm should be activated.
- Smoke samples: The number of smoke samples required before the sensor unit triggers an alarm.

Various embodiments may include only some of these configuration values, and in some embodiments certain values may be permanent (i.e. not user configurable). Embodiments of the invention may also include additional configuration values or parameters not listed above.

It should be noted that while part of the motivation for the invention has been to provide security solutions to multi dwelling units, and the above examples are described in that context, the invention as such can, as already mentioned, be adapted to use in other situations where one or more buildings, structures or areas are subdivided into units that are loosely associated with each other, while those who occupy each subdivision are more closely associated. Examples may include hotels and motels, college dormitories, office buildings, military camps, schools, etc. The invention is thus not limited to systems installed in a specific type of area or environment. Instead it is defined by the technical features and capabilities that are included, as defined in the appended claims. In the appended claims, such buildings, structures or areas will be referred to as security groups, while the subdivisions are referred to as security zones.

As such, the terms used in the appended claims should be interpreted to cover more specific terms at least according to the following list:
- Security group - multi dwelling unit, apartment building, school, hospital, hotel, department store, campus residence, offshore installation, office building, production plant, ship; any building(s) or structure(s) that include a plurality of zones which individually is associated with a group of people and collectively are administered as part of the security group
- Security zone - dwelling unit, apartment, class room, floor, building sub division, office unit, room, hotel room, hospital department, cabin, production hall; any building, structure, or subdivision thereof, that may be associated with a group of people, but which is administered as part of a security group together with other security zones. A security zone may include none, one or multiple sensor units. Some security zones may not be associated with any specific group of people, for example security zones representative of common areas like stairwells.
- Sensor unit - smoke detector, fire detector, humidity detector, temperature detector, gas detector, motion detector, etc. or any combination thereof; any device including one or more sensors and capable of detecting a physical parameter indicative of an alarm condition and generate alarm messages as described herein. Sensor units are associated with one security zone, but multiple sensor units may be associated with the same security zone
- Back-end server-web server, application server, file server, communication server, portal, database; any computer device which is capable of receiving and transmitting messages and maintaining a registry of the various units included in the system.
- Prioritized security zone - common area, basement, attic, stairwell, lobby, hall, public area, etc.; however, whether a security zone actually is prioritized is a question of configuration of the system, not of the actual location of the sensor units. Consequently, an apartment, for example, may be defined as a prioritized security zone, while a common area does not have to be defined as a prioritized security zone.

## Claims

1. Alarm system for detecting alarm conditions in a security group (100) with a plurality of security zones (101, 102, 103), comprising:
a plurality of sensor units (104) including:
- at least one sensor (202),
- a controller unit (201) configured to receive sensor data from the at least one sensor (202) and determine whether the received sensor data is indicative of an alarm condition;
- a memory for storing both data uniquely identifying the sensor unit (104) and data uniquely identifying the security zone (101, 102, 103) to which each of the sensor units (104) has been assigned;
- a first radio communication interface (203) for broadcasting messages to other sensor units, and
- a second radio communication interface (204) for transmitting data packets over a computer network;
a back-end server connected (107) to a computer network, the back-end server (107) holding a representation of:
said plurality of sensor units (104);
a plurality of security zones (101, 102, 103); and
one or more security groups (100);
an association of each sensor unit (104) with a security zone (101, 102, 103) and an association of each security zone (101, 102, 103) with a security group (100);
wherein each sensor unit (104) is configured to, upon detection of an alarm condition: generate an alarm message (302) including a description of the alarm condition, a unique identification of the message, and the data uniquely identifying the security zone (101, 102, 103) to which the sensor unit (104) is assigned, and the data uniquely identifying one or more buildings;
broadcast said alarm message over said first communication interface (203); and
transmit the created message in data packets over said second communication interface (204) addressed to said back-end server (107);
each sensor unit (104) is configured to:
- upon receipt of an alarm message identified by the same security zone (101, 102, 103) to which the sensor unit (104) is assigned, over said first radio communication interfaces (203), activating at least one of an audible and a visual alarm, and rebroadcast said received alarm message over said first communication interface (203) and transmit the created message in data packets over said second communication interface (204) addressed to said back-end server,
- upon receipt of an alarm message, identified by the same security zone (101, 102, 103) to which the sensor unit (104) is assigned, over said second radio communication interfaces (204), activating at least one of an audible and a visual alarm, and retransmitting the received alarm message (402, 503, 515, 605, 608) over said first radio communication interface (203);
and
- upon receipt of an alarm message, identified by a different security zone (101, 102, 103) to which the sensor unit (104) is assigned:
retransmitting the received alarm message (402, 503, 515, 605, 608) over said first radio communication interface (203), and
activating at least one of an audible and a visual alarm after a predetermined time delay; and
said back-end (107) server is configured to, upon receipt of an alarm message:
- update a list of alarm messages, and
- retransmit said received alarm message to said plurality of sensor units (104) over said second radio communication interfaces (204).

2. An alarm system according to claim 1, wherein said plurality of sensor units (104) further comprise at least one of an audible and a visual alarm unit and is configured to activate at least one of said audible and said visual alarm unit immediately upon detection of an alarm condition or after receipt of an alarm message from a sensor unit (104) which is associated with the same security zone (101, 102, 103), and after a predetermined time delay if an alarm message is received from a sensor unit which is associated with a different security zone (101, 102, 103).

3. An alarm system according to claim 1 or 2, wherein said back-end server (107) is configured to process sensor data extracted from a plurality of received alarm messages to determine at least one of a development over time and a distribution in space of the detected alarm condition, and, based on said determination, generate a presentation of at least one of a present alarm situation, a recommended escape route, and a determined presence of persons in the security group in which said alarm messages originated.

4. An alarm system according to claim 3, wherein said generated presentation is distributed as at least one of a message sent to devices connected to a cellular network and as a view presented as a web page.

5. A method for detecting alarm conditions in a security group (100) with a plurality of security zones (101, 102, 103), comprising:
providing a plurality of sensor units (104) comprising at least one sensor (202) in a plurality of locations each having a first and a second radio communication interface (203, 204);
associating each sensor unit (104) with a security zone (101, 102, 103);
associating each security zone (101, 102, 103) with a security group (100);
providing a controller unit (201) configured to receive sensor data from the at least one sensor (202) and determine whether the received sensor data is indicative of an alarm condition; providing a memory for storing both data uniquely identifying the sensor unit (104), and data uniquely identifying the security zone (101, 102, 103) to which the sensor unit (104) has been assigned;
providing a back-end server (107) connected to a computer network (106), the back-end server holding a representation of said plurality of sensor units (104), a plurality of security zones (101, 102, 103), and one or more security groups (100);
using sensors (202) in said sensor units (104) to monitor at least one physical parameter able to indicate the existence of an alarm condition;
upon detection of a physical parameter indicative of the existence of an alarm condition, generating an alarm message including a description of the alarm condition, a unique identification of the message, and the data uniquely identifying the security zone (101, 102, 103) to which the sensor unit is assigned, and the data uniquely identifying one or more buildings; and to broadcast the created message over the first radio communication interface (203) and to transmit the created message in data packets addressed to the back-end server over the second radio communication interface (204); and
upon receipt of an alarm message, identified by the same security zone (101, 102, 103) to which the sensor unit (104) is assigned, over said first radio communication interfaces (203), activating at least one of an audible and a visual alarm, and retransmitting the received alarm message oversaid firstradio communication interface, and transmit the created message in data packets over said second communication interface (204) addressed to saud back-end server, and
upon receipt of an alarm message, identified by the same security zone (101, 102, 103) to which the sensor unit (104) is assigned, over said second radio communication interfaces (204), activating at least one of an audible and a visual alarm, and retransmitting the received alarm message (402, 503, 515, 605, 608) over said first radio communication interface (203),
upon receipt of an alarm message, identified by a different security zone (101, 102, 103) to which the sensor unit (104) is assigned:
retransmitting the received alarm message (402, 503, 515, 605, 608) over said first radio communication interface (203), and
activating at least one of an audible and a visual alarm after a predetermined time delay;
configuring said back-end (107) server to, upon receipt of an alarm message:
- updating a list of alarm messages, and
- retransmitting said received alarm message to said plurality of sensor units (104) over said second radio communication interfaces (204).

6. A method according to claim 5, further comprising:
processing, in said back-end server (107), sensor data extracted from a plurality of received alarm messages to determine at least one of a development over time and a distribution in space of the detected alarm condition, and, based on said determination, generate a presentation of at least one of a present alarm situation, a recommended escape route, and a determined presence of persons in the security group in which said alarm messages originated.

7. A method according to claim 6, distributing said generated presentation as at least one of a message sent to devices connected to a cellular network and as a view presented as a web page.

## Patentansprüche

1. Alarmsystem zum Detektieren von Alarmzuständen in einer Sicherheitsgruppe (100) mit einer Vielzahl von Sicherheitszonen (101, 102, 103), umfassend:
eine Vielzahl von Sensoreinheiten (104), die Folgendes beinhaltet:
- mindestens einen Sensor (202),
- eine Steuerungseinheit (201), die dazu konfiguriert ist, Sensordaten von dem mindestens einen Sensor (202) zu empfangen und zu bestimmen, ob die empfangenen Sensordaten einen Alarmzustand angeben;
- einen Speicher zum Speichern von sowohl Daten, die die Sensoreinheit (104) eindeutig identifizieren, als auch Daten, die die Sicherheitszone (101, 102, 103), der jede der Sensoreinheiten (104) zugewiesen ist, eindeutig identifizieren;
- eine erste Funkkommunikationsschnittstelle (203) zum Aussenden von Meldungen an andere Sensoreinheiten und
- eine zweite Funkkommunikationsschnittstelle (204) zum Übertragen von Datenpaketen über ein Computernetz;
einen Backendserver (107), der mit einem Computernetz verbunden ist, wobei der Backendserver (107) eine Darstellung von Folgendem enthält:
der Vielzahl von Sensoreinheiten (104);
einer Vielzahl von Sicherheitszonen (101, 102, 103); und
einer oder mehreren Sicherheitsgruppen (100);
eine Verknüpfung jeder Sensoreinheit (104) mit einer Sicherheitszone (101, 102, 103) und eine Verknüpfung jeder Sicherheitszone (101, 102, 103) mit einer Sicherheitsgruppe (100);
wobei jede Sensoreinheit (104) bei Detektieren eines Alarmzustands zu Folgendem konfiguriert ist:
Erzeugen einer Alarmmeldung (302), die eine Beschreibung des Alarmzustands, eine eindeutige Identifizierung der Meldung und die Daten, die die Sicherheitszone (101, 102, 103), der jede der Sensoreinheiten (104) zugewiesen ist, eindeutig identifizieren, und die Daten, die ein oder mehrere Gebäude eindeutig identifizieren, beinhaltet;
Aussenden der Alarmmeldung über die erste Kommunikationsschnittstelle (203); und
Übertragen der erstellten Meldung in Datenpaketen, die an den Backendserver (107) adressiert sind, über die zweite Kommunikationsschnittstelle (204);
jede Sensoreinheit (104) zu Folgendem konfiguriert ist:
- bei Empfang einer Alarmmeldung, die durch dieselbe Sicherheitszone (101, 102, 103), der die Sensoreinheit (104) zugewiesen ist, identifiziert wird, über die erste Funkkommunikationsschnittstelle (203), Aktivieren mindestens eines von einem hörbaren und einem visuellen Alarm und erneutes Aussenden der empfangenen Alarmmeldung über die erste Kommunikationsschnittstelle (203) und Übertragen der erstellten Meldung in Datenpaketen, die an den Backendserver adressiert sind, über die zweite Kommunikationsschnittstelle (204),
- bei Empfang einer Alarmmeldung, die durch dieselbe Sicherheitszone (101, 102, 103), der die Sensoreinheit (104) zugewiesen ist, identifiziert wird, über die zweite Funkkommunikationsschnittstelle (204), Aktivieren mindestens eines von einem hörbaren und einem visuellen Alarm und Neuübertragen der empfangenen Alarmmeldung (402, 503, 515, 605, 608) über die erste Funkkommunikationsschnittstelle (203);
und
- bei Empfang einer Alarmmeldung, die durch eine andere Sicherheitszone (101, 102, 103), der die Sensoreinheit (104) zugewiesen ist, identifiziert wird:
Neuübertragen der empfangenen Alarmmeldung (402, 503, 515, 605, 608) über die erste Funkkommunikationsschnittstelle (203) und
Aktivieren mindestens eines von einem hörbaren und einem visuellen Alarm nach einer vorbestimmten Zeitverzögerung; und
der Backendserver (107) bei Empfang einer Alarmmeldung zu Folgendem konfiguriert ist:
- Aktualisieren einer Liste von Alarmmeldungen und
- Neuübertragen der empfangenen Alarmmeldung an die Vielzahl von Sensoreinheiten (104) über die zweite Funkkommunikationsschnittstelle (204).

2. Alarmsystem nach Anspruch 1, wobei die Vielzahl von Sensoreinheiten (104) ferner mindestens eine von einer hörbaren und einer visuellen Alarmeinheit umfasst und dazu konfiguriert ist, mindestens eine von der hörbaren und der visuellen Alarmeinheit bei Detektieren eines Alarmzustands oder nach Empfang einer Alarmmeldung von einer Sensoreinheit (104), die mit derselben Sicherheitszone (101, 102, 103) verknüpft ist, unmittelbar und, wenn eine Alarmmeldung von einer Sensoreinheit empfangen wird, die mit einer anderen Sicherheitszone (101, 102, 103) verknüpft ist, nach einer vorbestimmten Zeitverzögerung zu aktivieren.

3. Alarmsystem nach Anspruch 1 oder 2, wobei der Backendserver (107) dazu konfiguriert ist, Sensordaten zu verarbeiten, die aus einer Vielzahl empfangener Alarmmeldungen extrahiert sind, um mindestens eine von einer Entwicklung im Laufe der Zeit und einer räumlichen Verteilung des detektierten Alarmzustands zu bestimmen und basierend auf der Bestimmung eine Darstellung mindestens eines von einem aktuellen Alarmzustand, einem empfohlenen Fluchtweg und einer bestimmten Anwesenheit von Personen in der Sicherheitsgruppe, von der die Alarmmeldungen herrührten, zu erzeugen.

4. Alarmsystem nach Anspruch 3, wobei die erzeugte Darstellung als mindestens eine von einer Meldung, die an Vorrichtungen gesendet wird, die mit einem Mobilfunknetz verbunden sind, und einer Ansicht, die als eine Webseite dargestellt wird, verteilt wird.

5. Verfahren zum Detektieren von Alarmzuständen in einer Sicherheitsgruppe (100) mit einer Vielzahl von Sicherheitszonen (101, 102, 103), umfassend:
Bereitstellen einer Vielzahl von Sensoreinheiten (104), die mindestens einen Sensor (202) an einer Vielzahl von Orten umfasst, wobei jeder eine erste und eine zweite Funkkommunikationsschnittstelle (203, 204) aufweist;
Verknüpfen jeder Sensoreinheit (104) mit einer Sicherheitszone (101, 102, 103);
Verknüpfen jeder Sicherheitszone (101, 102, 103) mit einer Sicherheitsgruppe (100);
Bereitstellen einer Steuerungseinheit (201), die dazu konfiguriert ist, Sensordaten von dem mindestens einen Sensor (202) zu empfangen und zu bestimmen, ob die empfangenen Sensordaten einen Alarmzustand angeben;
Bereitstellen eines Speichers zum Speichern von sowohl Daten, die die Sensoreinheit (104) eindeutig identifizieren, als auch Daten, die die Sicherheitszone (101, 102, 103), der die Sensoreinheit (104) zugewiesen worden ist, eindeutig identifizieren;
Bereitstellen eines Backendservers (107), der mit einem Computernetz (106) verbunden ist, wobei der Backendserver eine Darstellung der Vielzahl von Sensoreinheiten (104), einer Vielzahl von Sicherheitszonen (101, 102, 103) und einer oder mehrerer Sicherheitsgruppen (100) enthält;
Verwenden von Sensoren (202) in den Sensoreinheiten (104), um mindestens einen physischen Parameter zu überwachen, der das Vorliegen eines Alarmzustands anzugeben vermag;
bei Detektieren eines physischen Parameters, der das Vorliegen eines Alarmzustands angibt, Erzeugen einer Alarmmeldung, die eine Beschreibung des Alarmzustands, eine eindeutige Identifizierung der Meldung und die Daten, die die Sicherheitszone (101, 102, 103), der die Sensoreinheit zugewiesen ist, eindeutig identifizieren, und die Daten, die ein oder mehrere Gebäude eindeutig identifizieren, beinhaltet; und Aussenden der erstellten Meldung über die erste Funkkommunikationsschnittstelle (203) und Übertragen der erstellten Meldung in Datenpaketen, die an den Backendserver adressiert sind, über die zweite Funkkommunikationsschnittstelle (204); und
bei Empfang einer Alarmmeldung, die durch dieselbe Sicherheitszone (101, 102, 103), der die Sensoreinheit (104) zugewiesen ist, identifiziert wird, über die erste Funkkommunikationsschnittstelle (203), Aktivieren mindestens eines von einem hörbaren und einem visuellen Alarm und Neuübertragen der empfangenen Alarmmeldung über die erste Funkkommunikationsschnittstelle und Übertragen der erstellten Meldung in Datenpaketen, die an den Backendserver adressiert sind, über die zweite Kommunikationsschnittstelle (204) und
bei Empfang einer Alarmmeldung, die durch dieselbe Sicherheitszone (101, 102, 103), der die Sensoreinheit (104) zugewiesen ist, identifiziert wird, über die zweite Funkkommunikationsschnittstelle (204), Aktivieren mindestens eines von einem hörbaren und einem visuellen Alarm und Neuübertragen der empfangenen Alarmmeldung (402, 503, 515, 605, 608) über die erste Funkkommunikationsschnittstelle (203),
bei Empfang einer Alarmmeldung, die durch eine andere Sicherheitszone (101, 102, 103), der die Sensoreinheit (104) zugewiesen ist, identifiziert wird:
Neuübertragen der empfangenen Alarmmeldung (402, 503, 515, 605, 608) über die erste Funkkommunikationsschnittstelle (203) und
Aktivieren mindestens eines von einem hörbaren und einem visuellen Alarm nach einer vorbestimmten Zeitverzögerung;
Konfigurieren des Backendservers (107) zu Folgendem bei Empfang einer Alarmmeldung:
- Aktualisieren einer Liste von Alarmmeldungen und
- Neuübertragen der empfangenen Alarmmeldung an die Vielzahl von Sensoreinheiten (104) über die zweite Funkkommunikationsschnittstelle (204).

6. Verfahren nach Anspruch 5, ferner umfassend:
Verarbeiten, in dem Backendserver (107), von Sensordaten, die aus einer Vielzahl empfangener Alarmmeldungen extrahiert sind, um mindestens eine von einer Entwicklung im Laufe der Zeit und einer räumlichen Verteilung des detektierten Alarmzustands zu bestimmen und basierend auf der Bestimmung eine Darstellung mindestens eines von einem aktuellen Alarmzustand, einem empfohlenen Fluchtweg und einer bestimmten Anwesenheit von Personen in der Sicherheitsgruppe, von der die Alarmmeldungen herrührten, zu erzeugen.

7. Verfahren nach Anspruch 6, das die erzeugte Darstellung als mindestens eine von einer Meldung, die an Vorrichtungen gesendet wird, die mit einem Mobilfunknetz verbunden sind, und einer Ansicht, die als eine Website dargestellt wird, verteilt.

## Revendications

1. Système d'alarme pour détecter des conditions d'alarme dans un groupe de sécurité (100) avec une pluralité de zones de sécurité (101, 102, 103), comprenant :
une pluralité d'unités de capteur (104) comportant :
- au moins un capteur (202),
- une unité de dispositif de commande (201) configurée pour recevoir des données de capteur à partir de l'au moins un capteur (202) et déterminer si les données de capteur reçues indiquent une condition d'alarme ;
- une mémoire pour stocker à la fois des données identifiant de manière unique l'unité de capteur (104) et des données identifiant de manière unique la zone de sécurité (101, 102, 103) à laquelle chacune des unités de capteur (104) a été attribuée ;
- une première interface de communication radio (203) pour diffuser des messages à d'autres unités de capteur, et
- une seconde interface de communication radio (204) pour transmettre des paquets de données sur un réseau informatique ;
un serveur dorsal connecté (107) à un réseau informatique, le serveur dorsal (107) contenant une représentation :
de ladite pluralité d'unités de capteur (104) ;
d'une pluralité de zones de sécurité (101, 102, 103) ; et
d'un ou de plusieurs groupes de sécurité (100) ;
d'une association de chaque unité de capteur (104) avec une zone de sécurité (101, 102, 103) et d'une association de chaque zone de sécurité (101, 102, 103) avec un groupe de sécurité (100) ;
dans lequel chaque unité de capteur (104) est configurée pour, lors de la détection d'une condition d'alarme : générer un message d'alarme (302) comportant une description de la condition d'alarme, une identification unique du message et les données identifiant de manière unique la zone de sécurité (101, 102, 103) à laquelle l'unité de capteur (104) est attribuée, et les données identifiant de manière unique un ou plusieurs bâtiments ;
diffuser ledit message d'alarme sur ladite première interface de communication (203) ; et
transmettre le message créé dans des paquets de données sur ladite seconde interface de communication (204) adressés audit serveur dorsal (107) ;
chaque unité de capteur (104) est configurée pour :
- lors de la réception d'un message d'alarme identifié par la même zone de sécurité (101, 102, 103) à laquelle l'unité de capteur (104) est attribuée, sur lesdites premières interfaces de communication radio (203), activer au moins l'une d'une alarme sonore et d'une alarme visuelle, et rediffuser ledit message d'alarme reçu sur ladite première interface de communication (203) et transmettre le message créé dans des paquets de données sur ladite seconde interface de communication (204) adressés audit serveur dorsal,
- lors de la réception d'un message d'alarme, identifié par la même zone de sécurité (101, 102, 103) à laquelle l'unité de capteur (104) est attribuée, sur lesdites secondes interfaces de communication radio (204), activer au moins l'une d'une alarme sonore et d'une alarme visuelle, et retransmettre le message d'alarme reçu (402, 503, 515, 605, 608) sur ladite première interface de communication radio (203) ;
et
- lors de la réception d'un message d'alarme, identifié par une zone de sécurité différente (101, 102, 103) à laquelle l'unité de capteur (104) est attribuée :
retransmettre le message d'alarme reçu (402, 503, 515, 605, 608) sur ladite première interface de communication radio (203), et
activer au moins l'une d'une alarme sonore et d'une alarme visuelle après un délai prédéterminé ; et
ledit serveur dorsal (107) est configuré pour, lors de la réception d'un message d'alarme :
- mettre à jour une liste de messages d'alarme, et
- retransmettre ledit message d'alarme reçu à ladite pluralité d'unités de capteur (104) sur lesdites secondes interfaces de communication radio (204).

2. Système d'alarme selon la revendication 1, dans lequel ladite pluralité d'unités de capteur (104) comprennent en outre au moins l'une d'une unité d'alarme sonore et d'une unité d'alarme visuelle et est configurée pour activer au moins l'une de ladite unité d'alarme sonore et de ladite unité d'alarme visuelle immédiatement lors de la détection d'une condition d'alarme ou après réception d'un message d'alarme à partir d'une unité de capteur (104) qui est associée à la même zone de sécurité (101, 102, 103), et après un délai prédéterminé si un message d'alarme est reçu à partir d'une unité de capteur qui est associée à une zone de sécurité différente (101, 102, 103).

3. Système d'alarme selon la revendication 1 ou 2, dans lequel ledit serveur dorsal (107) est configuré pour traiter des données de capteur extraites à partir d'une pluralité de messages d'alarme reçus afin de déterminer au moins l'un d'un développement dans le temps et d'une distribution dans l'espace de la condition d'alarme détectée, et, sur la base de ladite détermination, générer une présentation d'au moins l'une d'une situation d'alarme actuelle, d'une voie d'évacuation recommandée et d'une présence déterminée de personnes dans le groupe de sécurité dans lequel lesdits messages d'alarme ont été émis.

4. Système d'alarme selon la revendication 3, dans lequel ladite présentation générée est distribuée sous la forme d'au moins un message envoyé à des dispositifs connectés à un réseau cellulaire et sous la forme d'une vue présentée sous la forme d'une page Web.

5. Procédé de détection de conditions d'alarme dans un groupe de sécurité (100) avec une pluralité de zones de sécurité (101, 102, 103), comprenant :
la fourniture d'une pluralité d'unités de capteur (104) comprenant au moins un capteur (202) dans une pluralité d'emplacements ayant chacun une première et une seconde interfaces de communication radio (203, 204) ;
l'association de chaque unité de capteur (104) à une zone de sécurité (101, 102, 103) ;
l'association de chaque zone de sécurité (101, 102, 103) à un groupe de sécurité (100) ;
la fourniture d'une unité de dispositif de commande (201) configurée pour recevoir des données de capteur à partir de l'au moins un capteur (202) et déterminer si les données de capteur reçues sont indicatives d'une condition d'alarme ;
la fourniture d'une mémoire pour stocker à la fois des données identifiant de manière unique l'unité de capteur (104) et des données identifiant de manière unique la zone de sécurité (101, 102, 103) à laquelle l'unité de capteur (104) a été attribuée ;
la fourniture d'un serveur dorsal (107) connecté à un réseau informatique (106), le serveur dorsal contenant une représentation de ladite pluralité d'unités de capteur (104), une pluralité de zones de sécurité (101, 102, 103) et un ou plusieurs groupes de sécurité (100) ;
l'utilisation de capteurs (202) dans lesdites unités de capteur (104) pour surveiller au moins un paramètre physique capable d'indiquer l'existence d'une condition d'alarme ;
lors de la détection d'un paramètre physique indicatif de l'existence d'une condition d'alarme, la génération d'un message d'alarme comportant une description de la condition d'alarme, une identification unique du message et les données identifiant de manière unique la zone de sécurité (101, 102, 103) à laquelle l'unité de capteur est attribuée, et les données identifiant de manière unique un ou plusieurs bâtiments ; et diffuser le message créé sur la première interface de communication radio (203) et transmettre le message créé dans des paquets de données adressés au serveur dorsal sur la seconde interface de communication radio (204) ; et
lors de la réception d'un message d'alarme, identifié par la même zone de sécurité (101, 102, 103) à laquelle l'unité de capteur (104) est attribuée, sur lesdites premières interfaces de communication radio (203), l'activation d'au moins l'une d'une alarme sonore et d'une alarme visuelle, et la retransmission du message d'alarme reçu sur ladite première interface de communication radio, et la transmission du message créé dans des paquets de données sur ladite seconde interface de communication (204) adressés audit serveur dorsal, et
lors de la réception d'un message d'alarme, identifié par la même zone de sécurité (101, 102, 103) à laquelle l'unité de capteur (104) est attribuée, sur lesdites secondes interfaces de communication radio (204), l'activation d'au moins l'une d'une alarme sonore et d'une alarme visuelle, et la retransmission du message d'alarme reçu (402, 503, 515, 605, 608) sur ladite première interface de communication radio (203) ;
lors de la réception d'un message d'alarme, identifié par une zone de sécurité différente (101, 102, 103) à laquelle l'unité de capteur (104) est attribuée :
la retransmission du message d'alarme reçu (402, 503, 515, 605, 608) sur ladite première interface de communication radio (203), et
l'activation d'au moins l'une d'une alarme sonore et d'une alarme visuelle après un délai prédéterminé ; et
la configuration dudit serveur dorsal (107) pour, lors de la réception d'un message d'alarme :
- mettre à jour une liste de messages d'alarme, et
- retransmettre ledit message d'alarme reçu à ladite pluralité d'unités de capteur (104) sur lesdites secondes interfaces de communication radio (204).

6. Procédé selon la revendication 5, comprenant en outre :
le traitement, dans ledit serveur dorsal (107), de données de capteur extraites à partir d'une pluralité de messages d'alarme reçus pour déterminer au moins l'un d'un développement dans le temps et d'une distribution dans l'espace de la condition d'alarme détectée, et, sur la base de ladite détermination, générer une présentation d'au moins l'une d'une situation d'alarme actuelle, d'une voie d'évacuation recommandée et d'une présence déterminée de personnes dans le groupe de sécurité dans lequel lesdits messages d'alarme ont été émis.

7. Procédé selon la revendication 6, distribuant ladite présentation générée sous la forme d'au moins l'un d'un message envoyé à des dispositifs connectés à un réseau cellulaire et sous la forme d'une vue présentée sous la forme d'une page Web.
